# EUROPEAN PATENT APPLICATION

(11) **EP 1 951 018 A2**
(43) Date of publication of application: **30.07.2008**
(21) Application number: 07254954.6
(22) Date of filing: 19.12.2007
(51) Int. Cl.: H05K 5/00

(54) **Hybrid electric drive cradle**

(30) Priority: 16.01.2007 US 653616
(71) Applicant: ArvinMeritor Technology, LLC, Troy, MI 48084 (US)
(72) Inventor: Kramer, Dennis A., Troy Michigan 48098 (US)
(74) Representative: Foot, Paul Matthew James

(57) **Abstract**

An electric drive unit is pre-assembled within a cradle housing that is to be mounted as a single unit on a vehicle structure to provide a hybrid vehicle. The electric drive unit includes a pair of inverters, a pair of battery packs, a pair of cooling units, and an electronic control unit (ECU) that are enclosed within the cradle housing. A transfer case with an associated pair of electric motors is also supported by the cradle housing. The cradle housing is mounted to a pair of vehicle frame rails and extends laterally across a vehicle.

## Description

### TECHNICAL FIELD

A cradle housing supports an electric drive, which is pre-assembled as a unit and is mounted to a vehicle structure to provide a hybrid vehicle.

### BACKGROUND OF THE INVENTION

The automotive industry is continually seeking to improve fuel economy for vehicle applications. One solution is to provide hybrid vehicle designs that utilize multiple sources of power. In one known configuration, a hybrid vehicle includes an electric drive and an internal combustion engine that cooperate with each other to power a vehicle.

Typically, hybrid vehicle drive trains are either completely new vehicle designs or are retro-fit designs for existing vehicles. New vehicle designs optimize performance, packaging, end unit cost, etc., but have a downside of high development cost. Retro-fit designs have lower development costs but overall performance is less than optimal, and end unit cost can be high.

Thus, there is a need for a packaging solution for an electric drive unit that can be easily incorporated into new vehicle designs, or easily installed within existing vehicles, to provide a more cost effective hybrid vehicle.

### SUMMARY OF THE INVENTION

The subject invention provides an electric drive unit that is easily installed on a vehicle structure to provide a hybrid vehicle. A method for assembling the electric drive includes the steps of providing a cradle housing, supporting a transfer case on the cradle housing where the transfer case is capable of providing driving output to at least one drive axle, and coupling at least one electric motor to the transfer case to provide driving input to the transfer case. The method further includes assembling at least one inverter, at least one cooling unit, at least one battery pack, a controller, and the transfer case to the cradle housing to form a pre-assembled electric drive unit that is mountable as a single unit to the vehicle structure.

In one example configuration, the cradle housing supports and encloses the inverter, the cooling unit, the battery pack, and the controller. The cradle housing can be a panel over welded frame structure, or can be formed as a uni-body construction, for example. Further, the electric drive unit can be completely sealed within the cradle housing to provide protection for internally housed components.

The transfer case is mounted to extend outwardly from the cradle housing in an over-slung or under-slung configuration. Thus, the cradle housing and transfer case are configured to provide a T-shaped packaging envelope that can be easily fitted into new vehicle designs and/or easily retro-fitted into existing vehicle configurations.

In one example, a pair of inverters, a pair of battery packs, a pair of cooling units, and the controller are enclosed within the cradle housing. A pair of electric motors is mounted to the transfer case to provide driving input to the transfer case. The cradle housing is mounted to a pair of vehicle frame rails and extends laterally across a vehicle. The inverters, battery packs, cooling units, controller, and transfer case are orientated within the cradle housing to be symmetrical about a longitudinal axis. Symmetrical placement distributes loads, power source, and cooling requirements equally over the pair of vehicle frame rails.

The subject electric drive unit with the cradle housing can be easily incorporated into new vehicle designs and applications, or can be retro-fitting into existing heavy vehicle configurations. These and other features of the present invention can be best understood from the following specification and drawings, the following of which is a brief description.

### BRIEF DESCRIPTION OF THE DRAWINGS

Figure 1 is a perspective view of an electric drive unit incorporating the subject invention.
Figure 2 is a perspective view of the electric drive unit installed on a vehicle structure.
Figure 3 shows a vehicle with the electric drive unit.
Figure 4 is a schematic representation of a transfer case used with the electric drive unit.

### DETAILED DESCRIPTION OF THE PREFERRED EMBODIMENT

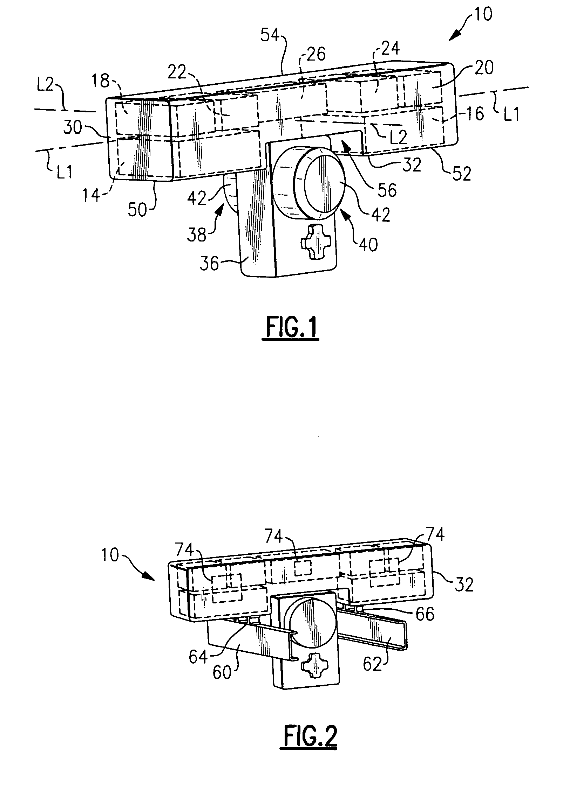

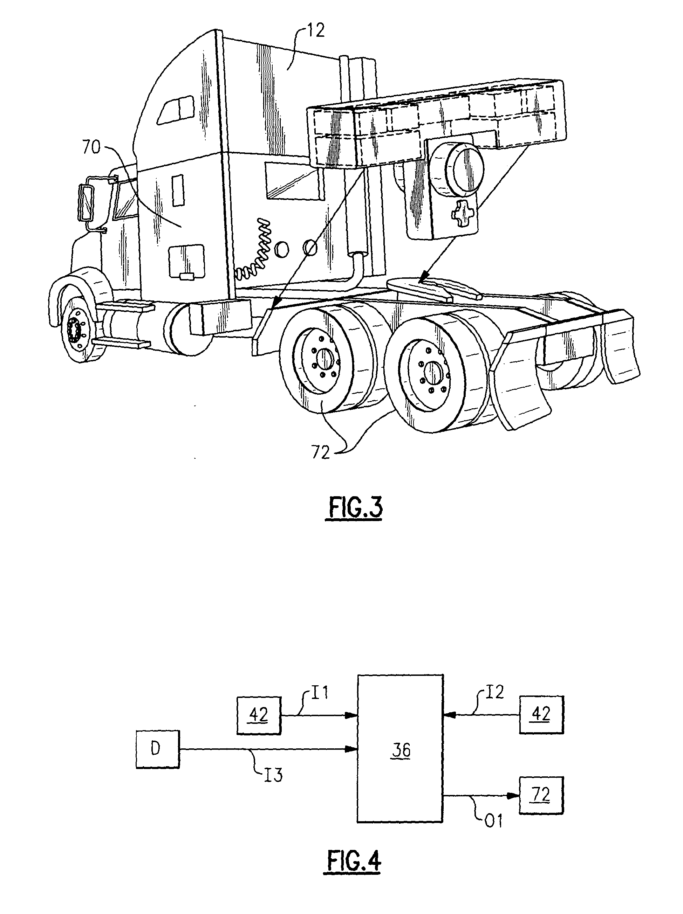

An electric drive unit 10 is shown in Figure 1. The electric drive unit 10 is a pre-assembled unit that is installed as a single unit in a vehicle 12 (Figure 3) to provide a hybrid vehicle. The vehicle 12 includes a traditional internal combustion engine drive configuration (not shown) as known. The electric drive unit 10 and internal combustion engine can operate independently of each other to power the vehicle 12 and/or can cooperate with each other to simultaneously power the vehicle.

The electric drive unit 10 includes first 14 and second 16 battery packs, first 18 and second 20 cooling units, and first 22 and second 24 inverters. An electronic control unit (ECU) or controller 26 is also included in the electric drive unit 10. The first 14 and second 16 battery packs, first 18 and second 20 cooling units, first 22 and second 24 inverters, and controller 26 are all supported by a common cradle housing 30. The cradle housing 30 comprises a panel over welded frame structure, or can be formed as a uni-body construction, for example. The first 14 and second 16 battery packs, first 18 and second 20 cooling units, first 22 and second 24 inverters, and controller 26 are mounted within the cradle housing 30 for protection, and in one example configuration can be completely enclosed within the cradle housing 30 to provide a sealed unit. This configuration has an additional advantage of providing a safety barrier to high voltage wiring associated with the electric drive unit 10.

The first 14 and second 16 battery packs, first 18 and second 20 cooling units, first 22 and second 24 inverters, and controller 26 are mounted to the cradle housing 30 to form a pre-assembled unit 32 that can be easily installed into the vehicle 12 as a single unit. Also part of the pre-assembled unit 32 is a transfer case 36 that is positioned in an over-slung or under-slung configuration depending upon vehicle application and available packaging space. The example shown in Figures 1-3 comprises an under-slung configuration.

First 38 and second 40 electric motors are mounted to opposing sides of the transfer case 36. The first 38 and second 40 electric motors provide driving input to the transfer case 36. The first 38 and second 40 electric motors each include a housing 42 that is directly mounted to the transfer case 36 to provide a compact assembly. The transfer case 36 includes at least one driving output that is capable of driving a vehicle axle 72 (Figure 3).

The cradle housing 30 includes a first end portion 50, a second end portion 52, and a central portion 54 that extends between and connects the first 50 and second 52 end portions. In the example shown, the central portion 54 has a smaller thickness in a vertical direction than the first 50 and second 52 end portions to form a notch or recess 56. The transfer case 36 is positioned within this recess 56 to extend outwardly, away from the central portion 54. The cradle housing 30 and transfer case 36 are positioned to form a T-shaped packaging envelope. The resulting packaging configuration is very compact, and thus can easily be incorporated into new vehicle designs or retro-fitted into existing vehicles.

The first 50 and second 52 end portions of the cradle housing 30 are laterally spaced apart from each other along a lateral axis L1. This lateral axis L1 extends across a width of the vehicle 12. The first inverter 22, the first cooling unit 18, and the first battery pack 14 are supported within the first end portion 50. The second inverter 24, the second cooling unit 20, and second battery pack 16 are supported within the second end portion 52. The controller 26 is supported within the central portion 54. The first 14 and second 16 battery packs, first 18 and second 20 cooling units, first 22 and second 24 inverters, and controller 26 are symmetrically packaged within the cradle housing 30 to be symmetrical about a longitudinal axis L2, which extends along a length of the vehicle 12. The transfer case 36 and electric motors 38, 40 are centrally located to be positioned adjacent an intersection of the longitudinal L2 and lateral L2 axes. This symmetrical configuration more evenly distributes loads, power source requirements, and cooling requirements.

In the example shown, the first inverter 22 is immediately adjacent one side of the controller 26 and the second inverter 24 is immediately adjacent an opposite side of the controller 26. The first cooling unit 18 is outboard of the first inverter 22 and the second cooling unit 20 is outboard of the second inverter 24. The first battery pack 14 is positioned directly below the first inverter 22 and first cooling unit 18, and the second battery pack 16 is positioned directly below the second inverter 24 and the second cooling unit 20.

The first 18 and second 20 cooling units are liquid/air cooling units; however, other types of cooling units could also be used. In one example, the first 14 and second 16 battery packs are NaNiCl (Sodium-Nickel-Chlorine) battery packs; however, other types of battery packs could also be used. The first 22 and second 24 inverters are insulated gate bipolar transistor (IGBT) drive inverters; however, other types of inverters could also be used. The first 38 and second 40 electric motors are switched reluctance (SR) motors; however, other types of motors could also be used. Finally, the transfer case 36, schematically shown in Figure 4, is optimally a two-speed transfer case having one output O1 (to a drive axle) and three inputs (one input for each of the electric motors I1, I2, and one input I3 for a driving element D of the internal combustion drive configuration). However, other transfer case configurations could also be used.

Notably, all of these components, and their interactions, are known in the art. It is the packaging which is inventive here.

The controller 26 can be a vehicle control ECU and can be programmed to run accessory drives. Further, the controller 26 includes connection interfaces as needed. Access panels 74 can be included in the cradle housing 30 to provide easy access to internal drive unit components for maintenance and/or repair.

The pre-assembled unit 32 is mounted to a vehicle structure as shown in Figure 2. In the example shown, the vehicle structure comprises first 60 and second 62 frame rails. The first end portion 52 is mounted to the first frame rail 60 with a first mount structure 64 and the second end portion 50 is mounted to the second frame rail 62 with a second mount structure 66. The first 64 and second 66 mount structures are similar to existing motor mount structures. Thus, the pre-assembled unit 32 has a length that extends laterally across a width of the vehicle 12 with the transfer case 36 being positioned generally centrally between the first 60 and second 62 frame rails.

This pre-assembled unit 32 with the T-shaped packaging envelope is easily installed as a single unit into a heavy vehicle as shown in Figure 3. In the example shown, the pre-assembled unit 32 is positioned behind a vehicle cab 70 and forward of a tandem drive axle 72 such that the transfer case 36 can easily provide driving input to the tandem drive axle 72. Further, in this position, the unit takes advantage of readily available packaging space and takes minimal time and installation effort.

The pre-assembled unit 32 includes all basic drive train components for an electric drive and provides a sealed and serviceable unit. This unit 32 is easily installed within a heavy vehicle, such as a class 8 truck for example, using existing motor mount technology. Further, minimal wiring interfaces, such as a controller area network (CAN) data bus for example, are needed to complete installation.

Although a preferred embodiment of this invention has been disclosed, a worker of ordinary skill in this art would recognize that certain modifications would come within the scope of this invention. For that reason, the following claims should be studied to determine the true scope and content of this invention.

## Claims

1. An electric drive unit for a hybrid vehicle comprising:
a cradle housing to be supported on a vehicle structure;
at least one inverter supported by said cradle housing;
at least one cooling unit supported by said cradle housing;
at least one battery pack supported by said cradle housing;
a controller supported by said cradle housing; and
a transfer case supported by said cradle housing, said transfer case receiving driving input from at least one electric motor and adapted for providing driving output to at least one drive axle, wherein said at least one inverter, said at least one cooling unit, said at least one battery pack, said controller, and said transfer case are assembled to said cradle housing to form a single unit that is mountable to the vehicle structure.

2. The electric drive unit according to claim 1 wherein said at least one inverter, said at least one cooling unit, said at least one battery pack, and said controller are substantially enclosed within said cradle housing.

3. The electric drive unit according to claim 2 wherein said at least one inverter, said at least one cooling unit, said at least one battery pack, and said controller are completely enclosed within said cradle housing such that said single unit comprises a sealed unit.

4. The electric drive unit according to claim 1 wherein said cradle housing includes a first end portion, a second end portion, and a central portion interconnecting said first and said second end portions, and wherein said transfer case is mounted to said cradle housing to extend away from said central portion in one of an over-slung and under-slung configuration.

5. The electric drive unit according to claim 4 wherein said first and said second end portions are laterally spaced apart from each other to extend across a vehicle width such that said cradle housing together with said transfer case defines a T-shaped packaging envelope.

6. The electric drive unit according to claim 4 wherein said first and said second end portions are laterally spaced apart from each other along a lateral axis to extend across a vehicle width and wherein the vehicle structure comprises first and second frame rails laterally spaced apart from each other with said first end portion being mountable to the first frame rail with a first mount and said second end portion being mounting to the second frame rail with a second mount such that said transfer case is positioned along said lateral axis between the first and second frame rails.

7. The electric drive unit according to claim 1 wherein said at least one electric motor comprises a first electric motor positioned on one side of said transfer case and a second electric motor positioned on an opposite side of said transfer case, said first and second electric motors providing driving input to said transfer case.

8. The electric drive unit according to claim 7 wherein said first and second electric motors each include a motor housing that is directly mounted to said transfer case.

9. The electric drive unit according to claim 7 wherein said first and second electric motors each comprise switched reluctance motors.

10. The electric drive unit according to claim 1 wherein said cradle housing includes a first end portion, a second end portion, and a central portion interconnecting said first and said second end portions and wherein:
said at least one inverter comprises a first inverter supported within said first end portion and a second inverter supported within said second end portion;
said at least one cooling unit comprises a first cooling unit supported within said first end portion and a second cooling unit supported within said second end portion;
said at least one battery pack comprises a first battery pack supported within said first end portion and a second battery pack supported within said second end portion; and
said controller is supported within said central portion.

11. The electric drive unit according to claim 10 wherein said first end portion and said second end portion are laterally spaced apart from each other along a lateral axis and wherein said single unit is symmetrical about a longitudinal axis that is perpendicular to said lateral axis such that said first inverter, said first cooling unit, and said first battery pack are positioned on one side of said longitudinal axis and said second inverter, said second cooling unit, and said second battery pack are positioned on an opposite side of said longitudinal axis.

12. The electric drive unit according to claim 11 wherein said controller and said transfer case are positioned adjacent an intersection of said longitudinal axis and said lateral axis.

13. The electric drive unit according to claim 10 wherein said first and said second inverters are positioned immediately adjacent respective opposing sides of said controller with said first cooling unit being positioned laterally outboard of said first inverter and said second cooling unit being positioned laterally outboard of said second inverter.

14. The electric drive unit according to claim 13 wherein said first battery pack is positioned vertically below said first inverter and said first cooling unit and wherein said second battery pack is positioned vertically below said second inverter and said second cooling unit.

15. The electric drive unit according to claim 10 wherein said first and second inverters each comprise an insulated gate bipolar transistor drive inverter.

16. The electric drive unit according to claim 10 wherein said first and second battery packs comprise NaNiCl battery packs.

17. A method for assembling an electric drive unit that is installable within a vehicle to form a hybrid vehicle comprising the steps of:
(a) providing a cradle housing;
(b) supporting a transfer case on the cradle housing, the transfer case being capable of providing driving output to at least one drive axle;
(c) coupling at least one electric motor to the transfer case to provide driving input to the transfer case; and
(d) assembling at least one inverter, at least one cooling unit, at least one battery pack, a controller, and the transfer case to the cradle housing to form a pre-assembled electric drive unit that is mountable to a vehicle structure.

18. The method according to claim 17 wherein the vehicle structure comprises first and second vehicle frame rails that are laterally spaced apart from each other and including mounting the pre-assembled electric drive unit to the first and second vehicle frame rails with first and second mounts.

19. The method according to claim 17 wherein the cradle housing includes a first end portion, a second end portion, and a central portion interconnecting the first and the second end portions and wherein:
the at least one inverter comprises a first inverter and a second inverter;
the at least one cooling unit comprises a first cooling unit and a second cooling unit; and
the at least one battery pack comprises a first battery pack and a second battery pack; and including:
positioning the first and second ends to be laterally spaced apart from each other along a lateral axis extending across a width of a vehicle,
positioning the first and second inverters, the first and second cooling units, the first and second battery packs, and the controller to be oriented in a symmetrical configuration about a longitudinal axis extending along a length of the vehicle, and
positioning the controller and the transfer case along the longitudinal axis such that the transfer case and cradle housing define a T-shaped packaging envelope.

20. The method according to claim 17 including completely enclosing the at least one inverter, the at least one cooling unit, the at least one battery pack, and the controller within the cradle housing to provide a sealed unit.
